Europäisches Patentamt

European Patent Office

Office européen des brevets

(19)

(11) **EP 0 968 041 B1**

(12) **EUROPÄISCHE PATENTSCHRIFT**

(45) Veröffentlichungstag und Bekanntmachung des Hinweises auf die Patenterteilung:
**11.05.2005 Patentblatt 2005/19**

(51) Int Cl.7: **B01D 39/04**, C12H 1/07

(21) Anmeldenummer: **98916844.8**

(22) Anmeldetag: **04.03.1998**

(86) Internationale Anmeldenummer:
**PCT/DE1998/000630**

(87) Internationale Veröffentlichungsnummer:
**WO 1998/040149 (17.09.1998 Gazette 1998/37)**

(54) **Verwendung eines Produktes als Filterhilfsmittel**

Use of a product as an ancillary filtering agent

Utilisation d'un produit comme agent auxiliaire de filtration

(84) Benannte Vertragsstaaten:
**BE DE ES FR GB IT NL**

(30) Priorität: **13.03.1997 DE 19710315**

(43) Veröffentlichungstag der Anmeldung:
**05.01.2000 Patentblatt 2000/01**

(73) Patentinhaber: **Herzog, Stefan**
**80333 München (DE)**

(72) Erfinder: **RETTENMAIER, Josef, Otto**
**D-73494 Rosenberg (DE)**

(74) Vertreter: **GROSSE BOCKHORNI SCHUMACHER**
**Patent- und Rechtsanwälte**
**Frühlingstrasse 43A**
**45133 Essen (DE)**

(56) Entgegenhaltungen:
**EP-A- 0 747 104      DE-A- 2 351 125**
**DE-A- 2 915 677      DE-A- 4 110 252**
**FR-A- 534 288        FR-A- 1 602 293**

• **PATENT ABSTRACTS OF JAPAN vol. 17, no. 388, 21. Juli 1993 & JP 05 068878 A (KOICHI ARAI ET AL.), 23. März 1993**
• **PATENT ABSTRACTS OF JAPAN vol. 5, no. 89 (C-58) [761] , 10. Juni 1981 & JP 56 033018 A (TAKEDAYAKUUUHIN KOGYO K.K.), 3. April 1981**
• **PATENT ABSTRACTS OF JAPAN vol. 1, no. 29 (C-76) [1668] , 28. März 1977 & JP 51 151269 A (KOGI KENKYUSHO K.K.), 25. Dezember 1976**

**Beschreibung**

Filterhilfsmittel auf Cellulosebasis sind seit langem bekannt ("Ullmanns Encyklopädie der technischen Chemie, 3. Auflage (1951), erster band, Seiten 492, Stichwort "Verfilzte Schichten" und 493, Stichwort "Filterungshilfsmittel"). Cellulose wird durch einen mehrstufigen chemischen Prozess hergestellt, bei dem alle sensorisch wirksamen Stoffe aus dem Rohstoff entfernt werden.

Filterhilfsmittel aus reiner Cellulose finden daher überall dort Anwendung, wo die sensorische Unbedenklichkeit des eingesetzten Filterhilfsmittels von wesentlicher Bedeutung ist. Beispiele für cellulosische Filterhilfsmittel sind: EFC (extraktarme Cellulose), feine Pulvercellulose, feine fibrillierte Cellulose, kationisierte Pulvercellulose, feine MCC (mikrokristalline Cellulose).

Filterhilfsmittel aus unbehandelten Holzfaserstoffen werden dagegen durch mechanische Zerkleinerung, also nur durch physikalische Behandlung hergestellt und können demnach im Verlauf der Filtration Extraktstoffe (Farbe, Geruch, Geschmack) abgeben. Der Einsatz von Filterhilfsmitteln auf Holzfaserbasis ist daher in der Regel auf technische Filtrationen mit geringeren Ansprüchen hinsichtlich der Sensorik beschränkt. Für Filtrationen im Nahrungs- und Genußmittelbereich, aber auch für viele technische Zwecke kommen sie nicht in Betracht, z.B. bei Zuckerlösungen (Glucose, Dextrose, Fructose), Melasse, Färbelösungen, Fetten und Ölen und dgl..

Das schwierige Gebiet der Getränkefiltration erfordert einerseits die vollkommene sensorische Neutralität des eingesetzten Filterhilfsmittels; andererseits ist die Zahl der grundsätzlich einsetzbaren Filterhilfsmittel aus wirtschaftlichen Gründen begrenzt, da die maximalen Aufwendungen für das Filterhilfsmittel vom Preis der in diesem Markt dominierenden mineralischen Filterhilfsmittel festgelegt wird.

Üblicherweise erfolgt die Bierfiltration in zwei Stufen. In der ersten Stufe handelt es sich in der Regel um eine Grobfiltration, bei der die Flüssigkeit meist eine angeschwemmte Schicht eines Filterhilfsmittels passiert. Dieser Stufe ist häufig eine Feinfiltration (Membran, Kieselgur etc.) nachgeschaltet.

Das maßgebliche Filterhilfsmittel für die Anschwemmfiltration auf dem Getränke-, insbesondere Biersektor ist Kieselgur. Ein hoher Prozentsatz der Weltbierproduktion wird mittels Kieselgurfiltration geklärt. Dies sind derzeit insgesamt mehr als 1,1 Mrd. hl Bier.

Der Gesamtbedarf an Filterhilfsmitteln liegt weltweit bei ca. 750.000 t pro Jahr, wobei der weitaus größte Anteil dieser Menge von anorganischen Stoffen wie eben Kieselgur, Perlite oder Bentonit gestellt wird. Von dieser Gesamtmenge werden weltweit etwa 250.000 t bis 300.000 t pro Jahr von der Getränkeindustrie verbraucht, zum großen Teil von Brauereien, aber auch von Herstellern von Wein und Fruchtsäften.

Der Anteil von Filterhilfsmitteln, die auf organischen, nachwachsenden Rohstoffen basieren (Cellulose, Holzfaserstoffe etc.) beläuft sich bislang nur auf ca. 20.000 t pro Jahr, obwohl deren Verwendung im Vergleich zu anorganischen Filterhilfsmitteln zahlreiche Vorteile bietet.

So handelt es sich bei den organischen Filterhilfsmitteln um natürliche Materialien, deren Qualität nur in geringen Grenzen schwankt und deren Vorkommen in regelmäßigen Abständen erneuert werden kann. Zudem birgt die Verwendung von organischen Filterhilfsmitteln weder gesundheitliche Risiken noch schädliche Auswirkungen für Umwelt und Natur. Pumpen und Förderelemente der Filtrationsanlagen werden aufgrund des nichtabrasiven Verhaltens bestmöglich geschont. Schließlich lassen sich die verbrauchten Filterkuchen beispielsweise über Landwirtschaft, Kompostierung oder Viehverfütterung relativ leicht entsorgen.

Allerdings sind die organischen Filterhilfsmittel zum Teil um ein Mehrfaches teurer als Kieselgur oder sie besitzen Filtrationseigenschaften, die denen der Kieselgur nicht in vollem Maß entsprechen.

Aus diesem Grund haben sich organische Filterhilfsmittel bisher gegen Kieselgur nicht in Szene setzen können bzw. sind allenfalls zusammen mit Kieselgur verwendet worden (Aufsatz von J. Speckner "Cellulose als Filterhilfsmittel" in Z. "Brauwelt", Jahrgang 124 (1984), Heft 46, Seiten 2058 bis 2066, insbesondere Seite 2062, linke Spalte oben).

Kieselgur erweist sich jedoch in zunehmendem Maße als problematisch. Als mineralischer Naturstoff ist sie in ihrem Vorkommen begrenzt. Inzwischen muß bei Kieselgur mehr und mehr auf minderwertige Qualitäten zurückgegriffen werden, um dem hohen Bedarf der Industrie gerecht zu werden. Dies führt jedoch zu steigenden Aufwendungen für die Reinigung und Verarbeitung der Kieselgur, die langfristig deren wirtschaftliche Situation negativ beeinflussen könnte.

Von noch größerem Einfluß ist aber die Tatsache, daß die Anwender gegenüber der Kieselgur eine zunehmend kritische Haltung einnehmen.

Dies ist auf die Lungengängigkeit vieler natürlicher Mineralstoffe und auch der Kieselgur zurückzuführen, die aus arbeitsmedizinischer Sicht sehr ernst zu nehmen ist. Die World Health Organisation (WHO) stufte Kieselgur 1988 nach Tierversuchsreihen als kanzerogenen Stoff ein. Für die Handhabung gelten strenge Vorschriften, die in Deutschland mehr und mehr beachtet und durchgesetzt werden.

Ein weiterer Aspekt besteht darin, daß die Entsorgung der Kieselgur in Industrieländern zunehmend kritischer wird. Eine Einstufung als Sondermüll erschwert die Deponierung erheblich. Mit der Einführung der neuen TA Siedlungsabfall verschärft sich die Entsorgungssituation für Kieselgur weiter. In vielen Fällen verursacht die Entsorgung von als Filterhilfsmittel gebrauchter Kieselgur bereits Kosten von ca. 600,00 DM pro t Kieselgur, wenn diese in der Bierfiltration eingesetzt wurde bzw. 1500,00 pro t Kieselgur, wenn diese bei der technischen Filtration von Problemstoffen verwendet wurde.

Ausgehend von diesen drängenden Problemen insbesondere auch auf dem Gebiet der Bierfiltration liegt der Erfindung die Aufgabe zugrunde, ein wirksames und wirtschaflich bereitstellbares Filterhilfsmittel zu entwickeln.

Diese Aufgabe wird durch die in Anspruch 1 wiedergegebene Erfindung gelöst.

Es sollen sensorisch, also farblich, geruchlich und/oder geschmacklich wirksame Stoffe vor dem Einsatz als Filterhilfsmittel in ausreichendem Maß aus dem Filterhilfsmittel entfernt werden, so daß keiner dieser Stoffe in nennenswertem Umfang in das Filtrat übergehen und dessen sensorische Eigenschaften beeinträchtigen kann. Die Partikel werden gewissermaßen sensorisch ausreichend neutralisiert, um als Filterhilfsmittel dienen zu können. Dabei ist wesentlich, daß die Behandlung nur gerade soweit getrieben wird, wie es für diesen Zweck erforderlich ist. Der Energie- und Chemikalieneinsatz bleibt in einem vertretbaren Rahmen, sodaß das Produkt wirtschaftlich mit Kieselgur konkurrieren kann. Die Einwirkung ist also nicht so durchgreifend, wie es bei der Herstellung von Cellulose aus Holzfasern der Fall ist. Überraschend wurde gefunden, daß durch eine Flüssigkeitsbehandlung eine ausreichende Neutralisierung der Partikel in sensorischer Hinsicht erreicht werden kann, ohne daß es gleichzeitig anzuwendender hoher Drücke und Temperaturen, großer Mengen scharfer Chemikalien und vielstündiger bis tagelanger Behandlungszeiten bedarf. Durch die Erfindung wird unter einem Aspekt den Pflanzenfaserstoffen ein erweitertes Anwendungsgebiet eröffnet, ohne daß es des Aufwandes wie bei der Celluloseherstellung bedarf.

Ausgangspunkt und bevorzugtes Anwendungsgebiet für die Erfindung ist zwar die Bier- und Getränkefiltration, wo es um die Schaffung eines Kieselgurersatzstoffes geht, doch ist die Erfindung nicht auf diesen Anwendungsbereich beschränkt.

Aus der DE-A-23 51 125 ist ein Produkt aus z. B. Sägespänen bekannt, die mit einer Lösung eines Hydroxids eines Alkali oder Erdalkalimetalls in Berührung gebracht worden sind. Das Produkt soll als Adsorptionsmittel zum Extrahieren von Metallen bzw. Metallionen aus Lösungen dienen.

Die FR-A-534 288 offenbart ein Filterhilfsmittel für Weine, welches aus gründlich gewaschener und zehn Minuten mit 1 %-iger Weinsäure behandelter Holzwolle besteht.

Die DE-A-29 15 677 lässt ein Filterhilfsmittel für geschmacksempfindliche Nahrungsmittel wie alkoholische Getränke wie Sake erkennen, weiches wenigstens zum Teil aus mit einem Oxidationsmittel wie Chlor, Natriumchlorit, Natriumhypochlorit oder Wasserstoffperoxid raffinierten Linterfasern besteht

Die DE 41 10 252 C1 ist auf ein Verfahren zum Filtrieren von Getränken, chemischen, pharmazeutischen oder ähnlichen Flüssigkeiten gerichtet, bei welchem zur Anschwemmung des Filterkuchens eine Mischung von Filterhilfsmitteln verwendet wird, die mindestens eine die Anschwemmung des Filterkuchens bewirkende, seine Dichte erhöhende Komponente von spezifisch schweren, chemisch beständigem Metall- und/oder Metalloxid- und/oder Kohlenstoff-Teilchen faseriger und/oder körniger Struktur sowie eine weitere Komponente aus Kunststoff- und/oder Zellulosefasern mit einer Faserlänge von 1 bis 5000 μm und einer Faserdicke von 0,5 bis 100 μm enthält.

Bei der bevorzugten Ausführungsform des Erfindungsgedankens umfassen die Holzpartikel Holzfasern (Anspruch 2) oder insbesondere Holzzerkleinerungsreste (Anspruch 3), also z. B. Sägemehl, Schleifmehl, Holzspäne, Hackspäne, Fräsabfall, Splitterholz und dergleichen.

Das für die Filtrierung verwendete Produkt soll tatsächlich noch Holzcharakter haben, d. h. es soll nicht praktisch quantitativ das Lignin aus dem Rohstoff Holz herausgelöst worden sein, wie es bei der Celluloseherstellung im Sulfit- oder Sulfatverfahren durch vielstündige Behandlung unter erhöhtem Druck bei weit über 100 °C liegenden Temperaturen geschieht.

Die Behandlungszeit bei der Erfindung kann relativ kurz sein, z. B. unter zwei Stunden betragen, so dass sie sich um fast eine Größenordnung von der Behandlungszeit bei der Celluloseherstellung unterscheidet. Das Ziel ist die Entfernung nur der Anteile des Holzes, die im Hinblick auf den Verwendungszweck als Filterhilfsmittel unerwünscht sind, d. h. geschmackliche, geruchliche und/oder farbliche Wirkungen im Filtrat ausüben. Es handelt sich hierbei nicht in erster Linie um Lignin, sondern um Verbindungen wie etherische Öle, Terpenöle und Terpenoide, Gerbsäuren, Fette und Wachse, phenolische Substanzen (Lignane, Phenylpropane, Cumarin) Stilbene, Flavonoide und dergleichen, die eine Menge von ca. 4 bis 5 Gewichtsprozent des trockenen Holzes ausmachen. Es hat sich gezeigt, dass die Verbindungen durch eine Behandlung mit verdünnten Laugen oder Säuren schon bei Umgebungstemperaturen unter Atmosphärendruck so weit aus dem Holz herausgelöst oder aber unwirksam gemacht werden können, dass die behandelten Holzpartikel für die praktische Verwendung als Filterhilfsmittel sensorisch hinreichend neutral sind. Es kommt nicht darauf an, dass bei einer scharfen Analyse keinerlei Rückstände der unerwünschten Art mehr festzustellen sind, sondern dass z. B. ein mit dem Filterhilfsmittel gefiltertes Medium bei der sensorischen Prüfung keinen Holzgeschmack oder Holzduft und keine braune Verfärbung erkennen lässt.

Gerade wegen der Verwendung von Holzpartikeln als Ausgangsprodukt kann das erfindungsgemäße Filterhilfsmittel besonders wirtschaftlich bereitgestellt werden. Die Kosten dürften in der gleichen Größenordnung wie die Kosten für Kieselgur liegen, aber nur etwa ein Drittel der Kosten für Cellulosepulver betragen.

Es scheint auch so zu sein, dass die erfindungsgemäß behandelten Holzpartikel eine oberflächlich zusätzlich aufgerauhte bzw. zerklüftete Struktur erhalten, die die Filtereigenschaften vorteilhaft beeinflusst.

Gemäß Anspruch 4 kann das Filterhilfsmittel im wesentlichen nur Holzpartikel ein und derselben Art, Größe und Vorbehandlung enthalten, also im wesentlichen einheitlich zusammengesetzt sein.

Es ist aber gemäß Anspruch 5 auch möglich, dass das Filterhilfsmittel mindestens zwei nach unterschiedlichen Verfahren zerkleinerte Anteile der Holzpartikel enthält, um die Filtrationseigenschaften den Erfordernissen entsprechend einstellen zu können.

Die Mahlung bestimmt weitgehend die Filtrationseigenschaften. Bei feiner Mahlung ist in der Regel die Permeabilität der Filterschicht geringer. Durch die Mahlung (Mikronisierung, Fibrillierung) wird zudem die Partikelform beeinflusst, die wiederum den noch zu erläuternden Wasserwert als Maß für die Durchlässigkeit der Filterschicht verändert. Bei fasrigen Celluloseprodukten können diese z. B. mehr oder weniger fibrilliert sein. Die Mahlung kann auch in mehreren Schritten erfolgen, indem sich einer ersten Mahlung zur Herstellung der Holzpartikel eine weitere Mahlung nach der Behandlung und vor oder nach der Trocknung anschließt

Unter dem gleichen Aspekt kann das Filterhilfsmittel mindestens zwei auf unterschiedliche Abmessungen zerkleinerte Anteile der Holzpartikel (Anspruch 6) und/oder Anteile aus mindestens zwei aus unterschiedlichen Ausgangsmaterialien hergestellten Holzpartikel enthalten (Anspruch 7).

Das Produkt kann auch andere, die Filtrationseigenschaften nicht beeinflussende Anteile enthalten (Anspruch 8).

Es kann auch eine Mischung mit anderen filteraktiven Anteilen sein (Anspruch 9), auch mit mineralischen Anteilen (Anspruch 10), namentlich mit Kieselgur (Anspruch 11), was die Wirkung hätte, den Kieselguranteil und die damit einhergehenden eingangs erwähnten Probleme zu reduzieren.

Es kommen aber als zusätzliche Bestandteile auch andere mineralische Filterhilfsmittel, insbesondere Perlite, in Betracht (Anspruch 12).

Gemäß Anspruch 13 soll die größte mittlere Partikelabmessung des gebrauchsfertigen Filterhilfsmittels unterhalb 3,0 mm liegen.

Bei faserförmigen Holzpartikeln hingegen soll der mittlere Faserdurchmesser unter 1,0 mm liegen (Anspruch 14).

Da die Holzpartikel durch Mahlung hergestellt sind, haben sie keine scharfe Größe, sondern eine Größenverteilung etwa nach einer Gauß'schen Kurve. Die Lage des Maximums dieser Kurve sei hier als größte Partikelabmessung verstanden.

Das erfindungsgemäße Filterhilfsmittel kann zur Bildung von Anschwemm-Filterschichten in der gleichen Weise eingesetzt werden, wie es bisher bei den mineralischen Filterhilfsmitteln der Fall war.

Ein in Betracht kommender Temperaturbereich bei der Behandlung der Partikel ist der Bereich der Umgebungstemperatur, der zwar keinen Heizenergieaufwand, dafür aber längere Behandlungszeiten erfordert (Anspruch 15).

Es kann gemäß Anspruch 16 beim Atmosphärendruck im Temperaturbereich von 70 bis 90 °C gearbeitet werden, was eine gegenüber der Umgebungstemperatur deutlich erhöhte, jedoch unter dem Siedepunkt liegende Temperatur bedeutet und den Einsatz von Druckgefäßen erübrigt. Dies führt mit einem Minimum an apparativem und energetischem Aufwand zu einem brauchbaren Filterhilfsmittel.

'Verdünnte Lauge" soll eine wässrige Lösung mit einem Anteil von 2 bis 10 Gew.-% der trockenen Lauge, bezogen auf den Feststoffgehalt, bedeuten (Anspruch 17).

Bei der bevorzugten Ausführungsform der Erfindung wird Natronlauge verwendet (Anspruch 18).

Die Einwirkungsdauer hängt abgesehen von Druck und Temperatur vom Lösungsvermögen der verdünnten Lauge für die unerwünschten Inhaltsstoffe ab. Bei verdünnter Lauge als Behandlungsflüssigkeit kommen auch keine Einwirkungsdauern im Sekundenbereich in Betracht, sondern solche, die im Vergleich zu den bei der Celluloseherstellung notwendigen mehrstündigen bis tagelangen Einwirkungsdauern kurz sind. Die Einwirkungsdauer ist zum Teil von der Partikelgröße abhängig.

Sie bemisst sich im übrigen danach, dass gerade nur die sensorisch maßgeblichen Stoffe aus den Partikeln, insbesondere den Holzpartikeln entfernt werden sollen. Letzteres Ziel ist erreicht, wenn höchstens 10 Gew.-% atro der Holzinhaltsstoffe entfernt werden (Anspruch 19), während es bei der Celluloseherstellung um die Befreiung von meist mehr als 30 % der Holzinhaltsstoffe geht.

Die Einwirkungsdauer kann bei einer Laugenbehandlung insbesondere zwischen 5 und 120 min. liegen (Anspruch 20).

Die Stoffdichte, d. h. der Gewichtsanteil der Partikel in der verdünnten Lauge kann bei der Behandlung 5 bis 25 % betragen (Anspruch 21).

Die Partikel können nach der Einwirkungsdauer gewaschen und getrocknet werden (Anspruch 22).

Die Partikelgröße (Maximum der Korngrößenverteilung) kann während der Behandlung bis zu 10 mm, vorzugsweise 0,1 bis 1,0 mm betragen (Anspruch 23).

Da bei einer Mahlung in der Nassphase sich die Kornform ändert, eröffnet sich auf diesem Wege eine Möglichkeit, den Wasserwert einzustellen (Anspruch 24).

Im Einzelfall ist es ohne Aufgabe der sensorischen Unbedenklichkeit möglich, die Holzpartikel nach der Laugenbehandlung und dem Trocknen weiter zu zerkleinem (Anspruch 25).

Um im Hinblick auf die Filtereigenschaften eindeutige Verhältnisse zu bekommen, empfiehlt es sich gemäß Anspruch 26, die Holzpartikel nach der Laugenbehandlung und dem Trocknen zu klassieren.

Eine in Betracht kommende Verwendung erfolgt insbesondere in der Getränke-, insbesondere Bierfiltration (Anspruch 27).

Andere Anwendungsfelder der Erfindung sind die Lebensmittelfiltration (Anspruch 28), also z.B. Zuckerlösungen, Speiseöl, Fett, Gelatine, Zitronensäure, Alginat usw., die Filtration im Bereich der Chemie (Anspruch 29), also z.B. Chloralkali, im Bereich der Reinigung von Hilfsflüssigkeiten der Metallbearbeitung (Anspruch 30), also z.B. Kühlschmierstoffe, Walzöle, Schleiföle usw., und im Bereich der Pharmazie und Kosmetik (Anspruch 31).

Zur Untersuchung der Wirksamkeit der erfindungsgemäßen Behandlung der Holzpartikel wurden unbehandelte Holzpartikel (Lignocel C 120) mit erfindungsgemäß behandelten Holzpartikeln (Probe Nr. 1; Probe Nr. 2; Probe Nr. 3) verglichen. Die Proben Nr. 1 bis Nr. 3 wurden wie folgt behandelt:

**Probe 1:** Zur Darstellung der behandelten Pflanzenfaserpartikel wurden in einem Misch- und Aufbereitungsreaktor bei 20 °C bis 25 °C ohne zusätzliches temperieren und ohne Rühren 330 g Holzfasermehl (Partikelbereich: 70-150 µm), 3700 ml Wasser und 15,8 g festes Natriumhydroxid digeriert (umgesetzt). Der Feststoffgehalt lag unter 10 Gew.-%, die Retentionszeit betrug mindestens 16 Stunden, der pH-Wert der wässrigen Lauge lag nach 16 Stunden unter 11,3.

Die Natronlauge wurde über einen Kunststoff-Filter abgenutscht, der vorgetrocknete Nasskuchen wurde in heißem Wasser (70 °C) aufgeschlämmt, so dass ein Feststoffgehalt unter 15 Gew.-% erreicht wurde. Es wurde mit verdünnter Salzsäure ein End-pH-Wert von 3,9 bis 7,0 eingestellt und die Lösung über einen Kunststoff-Filter abgenutscht. Die anschließende Nachwaschung erfolgte mindestens zweimal mit jeweils 200 bis 500 ml 70°C heißem Wasser.

**Probe 2** wurde mit heißer Lauge behandelt und kalt nachgewaschen. In einem Misch- und Aufbereitungsreaktor wurde bei Temperaturen über 50 °C und unter Rühren 330 g Holzfasermehl (Partikelbereich: 70-150 µm), 3700 ml Wasser und weniger als 12 g festes Natriumhydroxid digeriert (umgesetzt). Der Feststoffgehalt lag unter 10 Gew.-%, die Retentionszeit betrug mindestens 20 Minuten, der pH-Wert der wässrigen Lauge lag bei Versuchsende unter 10,8. Die Natronlauge wurde über einen Kunststoff-Filter abgenutscht, der vorgetrocknete Nasskuchen wurde in heißem Wasser (70 °C) aufgeschlämmt, so dass ein Feststoffgehalt unter 15 Gew.-% erreicht wurde. Es wurde mit verdünnter Salzsäure ein End-pH-Wert von 3,0 bis 7,0 eingestellt und die Lösung über einen Kunststoff-Filter abgenutscht. Die anschließende Nachwaschung erfolgte mindestens zweimal mit jeweils 200 bis 500 ml 20 °C kaltem Wasser.

**Probe 3** wurde im Technikum hergestellt. Der Feststoffgehalt war mit den Laboransätzen vergleichbar. Es wurde dreimal kalt gewaschen.

Zur Bestimmung der Ausbeute wurde der jeweils entstandene Nasskuchen 5 bis 10 mm dünn auf Folie aufgebracht und getrocknet.

An diesem Material wurden der Weißgrad und das Schüttgewicht bestimmt.

Die Ausbeute (atro) lag bei mindestens 97 Gew.-%, das heißt höchstens 3 Gew.-% der Bestandteile des eingesetzten Holzfasermehls wurden durch die Laugenbehandlung herausgelöst.

Die sensorische Prüfung erfolgte in einer wässrigen Aufschlämmung, in der 1 g Produkt bei 100 °C in 150 ml Wasser aufgeschlämmt worden war. An dieser Aufschlämmung wurden Geruch und Geschmack geprüft.

Um einen Eindruck zu gewinnen, was in dem unbehandelten Holzpartikelmaterial (Lignocel C 120) einerseits und dem der Laugenbehandlung unterworfenen Holzpartikelmaterial (Proben Nr. 1 - 3) andererseits an extrahierbaren Stoffen noch enthalten ist, wurden die Materialien einer Extraktion in einer Soxlethapparatur unterworfen. Die Menge der in den Materialien enthaltenen noch extrahierbaren Inhaltsstoffe sind ein Maß für die Eignung der Materialien als Filterhilfsmittel für sensorisch anspruchsvolle Filtrationen.

Bei der Extraktion in der Soxlethapparatur wurden 5 g des auf einen Feuchtegehalt unter 10 Gew.-% getrockneten Produkts 5 Stunden mit 250 ml Ethanol/Wasser (1:1) extrahiert und der Extraktgehalt gravimetrisch bestimmt.

Mit dem auf einen Feuchtegehalt unter 10 Gew.-% getrocknetem Material wurde schließlich nach einer Arbeitsvorschrift der Firma Schenk eine Versuchsfiltration bei 20°C durchgeführt, bei der die Naßkuchenhöhe, der Darcy-Wert, das Schwemmverhalten und der Wasserwert bestimmt wurden.

Die Ergebnisse der Versuche sind in der beigefügten Tabelle zusammengefaßt.

Die Beurteilung im sensorischen Bereich erfolgt nach Wertezahlen. 0 bedeutet gut, 10 bedeutet schlecht.

Es ist in der Tabelle zu sehen, daß das unbehandelte Material im Hinblick auf den Geruch einen Wert 8 aufweist, der wesentlich schlechter ist als die Werte der behandelten Proben Nr. 1 - 3.

Dasselbe gilt für den Geschmack, der bei dem unbehandelten Produkt Lignocel C 120 maximal schlecht zu beurteilen war.

Ein wichtiger Punkt ist die Extraktmenge. Bei dem unbehandelten Produkt Lignocel C 120 ließen sich noch 3,37% extrahieren, während die entsprechenden Werte der behandelten Produkte um 1,0% liegen. Das bedeutet, daß durch die relativ milde Laugenbehandlung ein erheblicher Teil der extrahierbaren und beim Einsatz des Produkts als Filterhilfsmittel unter Umständen störenden Inhaltsstoffe bereits herausgelöst worden sind.

Durch die Laugenbehandlung des Produktes und die anschließenden Waschvorgänge läßt sich in eienem gewissen Umfang Einfluß auf den Wasserwert nehmen, der ein Maß für die Durchlässigkeit des Filterhilfsmittels ist. Die Bestimmung des Wasserwertes erfolgt mit einem Labordruckfilter (Durchmesser 50 mm) und einem Wasserhochbehälter mit Niveauregelung. Zwischen dem Niveau des Wassers im Wasserhochbehälter und dem Filterboden ist eine Differenz von 2 m einzuhalten.

Der Laborfilter wird mit einer angefeuchteten durchlässigen Celluloseschicht (Schenk D-Schicht mit der Siebseite nach unten) versehen und verschlossen. Anschließend werden 25 g Filterhilfsmittel in 200 bis 300 ml reinem Wasser aufgeschlämmt und vollständig in den Laborfilter überführt. Der Laborfilter wird an den Wasserhochbehälter angeschlossen und entlüftet. Nach einer Minute werden 500 ml Wasser abfiltriert und anschließend die Zeit für die nächsten 100 ml Filtrat gestoppt. Der Wasserwert ergibt sich aus der gestoppten Zeit wie folgt:

$$\text{Wasserwert} = \frac{480}{\text{Zeit in Minuten}}$$

Wenn sich hierbei ein Wasserwert kleiner 150 ergibt, erfolgt die Bestimmung wie oben, jedoch unter Anwendung von nur 4 g Filterhilfsmittel. Dann ergibt sich

$$\text{Wasserwert} = \frac{76,8}{\text{Zeit in Minuten.}}$$

Je kleiner also die Zeit ist, die eine bestimmte Wassermenge zum Durchströmen der Filterschicht benötigt, desto größer ist der Wasserwert.

# TABELLE

| Produkt | Feuchtegehalt Gew.-% | Geruch | Geschmack | Trübung | Farbe | Extrakt % | Weiße % | Schüttgewicht g/dm³ | Naßkuchenhöhe mm/25 g | Darcy-Wert | Anströmverhalten | Wasserwert min⁻¹/25 g |
|---|---|---|---|---|---|---|---|---|---|---|---|---|
| Referenz: Lignocel C 120 | 9,0 | 8 | 10 (bitter) | 1 (fast klar) | 8 (gelb) | 3,37 | 58,4 | 128 | 78 | 5,3 | gut | 770 |
| Probe Nr. 1 | 3,5 | 1 | 2-3 (mild) | 0 (klar) | 1-2 (farblos) | 0,93 | 34,2 | n. b. | 83 | 9,0 | gut | 1098 |
| Probe Nr. 2 | 5,3 | 1 | 2-3 (mild) | 0 (klar) | 2 (farblos) | 1,04 | 34,1 | 125 | 82 | 7,3 | gut | 1010 |
| Probe Nr. 3 | 7,5 | 5 | 6 (neutral) | 1 (klar) | 2-3 (fast farblos) | 0,98 | 38,8 | 131 | 79 | 7,8 | gut | 1125 |

EP 0 968 041 B1

**Patentansprüche**

1. Verwendung eines Produktes, welches kleinteilige Holzpartikel umfasst, die bei einer Temperatur unter 100 °C und unter Atmosphärendruck einer sensorisch wirksame Stoffe aus den Holzpartikeln entfernenden Behandlung mit einer verdünnten Lauge unterzogen worden sind, als Filterhilfsmittel für die Anschwemmfiltration.

2. Verwendung nach Anspruch 1, **dadurch gekennzeichnet, dass** die Holzpartikel Holzfasern umfassen.

3. Verwendung nach Anspruch 1, **dadurch gekennzeichnet, dass** die Holzpartikel Holzzerkleinerungsreste umfassen.

4. Verwendung nach einem der Ansprüche 1 bis 3, **dadurch gekennzeichnet, dass** das Produkt im wesentlichen nur Holzpartikel ein und derselben Art, Größenverteilung und Vorbehandlung enthält.

5. Verwendung nach einem der Ansprüche 1 bis 3, **dadurch gekennzeichnet, dass** das Produkt mindestens zwei nach unterschiedlichen Verfahren zerkleinerte Anteile der Holzpartikel enthält.

6. Verwendung nach einem der Ansprüche 1 bis 5, **dadurch gekennzeichnet, dass** das Produkt mindestens zwei auf unterschiedliche Abmessungen zerkleinerte Anteile der Holzpartikel enthält.

7. Verwendung nach einem der Ansprüche 1 bis 6, **dadurch gekennzeichnet, dass** das Produkt Anteile aus mindestens zwei unterschiedlichen Ausgangsmaterialien hergestellter Holzpartikel enthält.

8. Verwendung nach einem der Ansprüche 1 bis 7, **dadurch gekennzeichnet, dass** das Produkt andere, die Filtrationseigenschaften nicht beeinflussende organische oder anorganische Anteile enthält.

9. Verwendung nach einem der Ansprüche 1 bis 8, **dadurch gekennzeichnet, dass** das Produkt andere, filteraktive Anteile enthält.

10. Verwendung nach einem Ansprüche 1 bis 9, **dadurch gekennzeichnet, dass** das Produkte andere, mineralische Anteile enthält.

11. Verwendung nach einem der Ansprüche 1 bis 10, **dadurch gekennzeichnet, dass** das Produkt Kieselgur enthält.

12. Verwendung nach einem der Ansprüche 1 bis 11, **dadurch gekennzeichnet, dass** das Produkt Perlite enthält.

13. Verwendung nach einem der Ansprüche 1 bis 12, **dadurch gekennzeichnet, dass** die mittlere Partikelabmessung des gebrauchsfertigen Produktes unterhalb 3,0 mm liegt.

14. Verwendung nach einem der Ansprüche 1 bis 13, **dadurch gekennzeichnet, dass** bei faserförmigen Holzpartikeln der mittlere Faserdurchmesser unter 1,0 mm liegt.

15. Verwendung nach einem der Ansprüche 1 bis 14, **dadurch gekennzeichnet, dass** die Temperatur der Behandlungsflüssigkeit während der Behandlung der Holzpartikel im Bereich der Umgebungstemperatur liegt.

16. Verwendung nach einem der Ansprüche 1 bis 14, **dadurch gekennzeichnet, dass** die Temperatur der Lauge während der Behandlung 70 bis 90°C beträgt.

17. Verwendung nach einem der Ansprüche 1 bis 16, **dadurch gekennzeichnet, dass** die Konzentration der verdünnten Lauge 2 bis 10 Gew.-%, bezogen auf den Feststoffgehalt beträgt.

18. Verwendung nach einem der Ansprüche 1 bis 17, **dadurch gekennzeichnet, dass** als Lauge Natronlauge verwendet wird.

19. Verwendung nach einem der Ansprüche 1 bis 18, **dadurch gekennzeichnet, dass** die Einwirkungsdauer so bemessen wird, dass höchstens 10 Gew.-% atro der Holzinhaltsstoffe entfernt werden.

20. Verwendung nach einem der Ansprüche 1 bis 19, **dadurch gekennzeichnet, dass** die Einwirkungsdauer 5 bis 120 min dauert.

**21.** Verwendung nach einem der Ansprüche 1 bis 20, **dadurch gekennzeichnet, dass** die Stoffdichte bei der Behandlung 5 bis 25 % beträgt.

**22.** Verwendung nach einem der Ansprüche 1 bis 21, **dadurch gekennzeichnet, dass** die Partikel nach der Einwirkungsdauer gewaschen und getrocknet werden.

**23.** Verwendung nach einem der Ansprüche 1 bis 22, **dadurch gekennzeichnet, dass** die Partikelgröße bei der Behandlung bis zu 10 mm, vorzugsweise 0,1 bis 1,0 mm beträgt.

**24.** Verwendung nach einem der Ansprüche 1 bis 23, **dadurch gekennzeichnet, dass** durch eine Beeinflussung der Mahlung in der Nassphase (Refiner) der Wasserwert eingestellt wird.

**25.** Verwendung nach einem der Ansprüche 1 bis 24, **dadurch gekennzeichnet, dass** die Partikel nach der Behandlung und vor dem Trocknen, gleichzeitig mit dem Trocknen oder nach dem Trocknen weiter zerkleinert werden.

**26.** Verwendung nach einem der Ansprüche 1 bis 25, **dadurch gekennzeichnet, dass** die Partikel nach der Behandlung und dem Trocknen klassiert werden.

**27.** Verwendung nach einem der Ansprüche 1 bis 26 in der Getränke-, insbesondere Bierfiltration.

**28.** Verwendung nach einem der Ansprüche 1 bis 26 in der Lebensmittelfiltration.

**29.** Verwendung nach einem der Ansprüche 1 bis 26 im Bereich der Reinigung von Flüssigkeiten in der Chemie.

**30.** Verwendung nach einem der Ansprüche 1 bis 26 im Bereich der Reinigung von Hilfsflüssigkeiten der Metallbearbeitung.

**31.** Verwendung nach einem der Ansprüche 1 bis 26 im Bereich der Pharmazie und Kosmetik.

**Claims**

**1.** Use of a product which comprises small-size wood particles which have been subjected, at a temperature below 100°C and under atmospheric pressure, to a treatment with a dilute lye solution which removes substances having a sensory action from the wood particles, as filter aids for deposition filtration.

**2.** Use according to claim 1, **characterised in that** the wood particles comprise wood fibres.

**3.** Use according to claim 1, **characterised in that** the wood particles comprise wood comminution residues.

**4.** Use according to any one of claims 1 to 3, **characterised in that** the product contains substantially only wood particles of one and the same type, size distribution and pre-treatment.

**5.** Use according to any one of claims 1 to 3, **characterised in that** the product contains at least two wood particle fractions comminuted by different processes.

**6.** Use according to any one of claims 1 to 5, **characterised in that** the product contains at least two wood particle fractions comminuted to different dimensions.

**7.** Use according to any one of claims 1 to 6, **characterised in that** the product contains fractions of wood particles made from at least two different starting materials.

**8.** Use according to any one of claims 1 to 7, **characterised in that** the product contains other organic or inorganic fractions which do not influence the filtration properties.

**9.** Use according to any one of claims 1 to 8, **characterised in that** the product contains other filter-active fractions.

**10.** Use according to any one of claims 1 to 9, **characterised in that** the product contains other mineral fractions.

**11.** Use according to any one of claims 1 to 10, **characterised in that** the product contains kieselguhr.

**12.** Use according to any one of claims 1 to 11, **characterised in that** the product contains perlite.

**13.** Use according to any one of claims 1 to 12, **characterised in that** the average particle size of the product ready for use is below 3.0 mm.

**14.** Use according to any one of claims 1 to 13, **characterised in that** in the case of wood particles in fibre form the average fibre diameter is below 1.0 mm.

**15.** Use according to any one of claims 1 to 14, **characterised in that** the temperature of the treatment liquid is within the ambient temperature range during the treatment of the wood particles.

**16.** Use according to any one of claims 1 to 14, **characterised in that** the temperature of the lye solution during the treatment is 70 to 90°C.

**17.** Use according to any one of claims 1 to 16, **characterised in that** the concentration of the dilute lye solution is 2 to 10% by weight based on the solid content.

**18.** Use according to any one of claims 1 to 17, **characterised in that** the lye solution used is caustic soda solution.

**19.** Use according to any one of claims 1 to 18, **characterised in that** the period of action is so organised that at maximum 10% by weight atro of the wood content substances are removed.

**20.** Use according to any one of claims 1 to 19, **characterised in that** the period of action lasts 5 to 120 minutes.

**21.** Use according to any one of claims 1 to 20, **characterised in that** the density of the substance during the treatment is 5 to 25%.

**22.** Use according to any one of claims 1 to 21, **characterised in that** the particles are washed and dried after the period of action.

**23.** Use according to any one of claims 1 to 22, **characterised in that** the particle size during the treatment is up to 10 mm, preferably 0.1 to 1.0 mm.

**24.** Use according to any one of claims 1 to 23, **characterised in that** the water value is adjusted by influencing the grinding in the wet phase (refiner).

**25.** Use according to any one of claims 1 to 24, **characterised in that** the particles are further comminuted after the treatment and before drying, simultaneously with drying, or after drying.

**26.** Use according to any one of claims 1 to 25, **characterised in that** the particles are classified after treatment and drying.

**27.** Use according to any one of claims 1 to 26 in beverage filtration, particularly beer filtration.

**28.** Use according to any one of claims 1 to 26 in food filtration.

**29.** Use according to any one of claims 1 to 26 in the area of cleaning liquids in the chemical industry.

**30.** Use according to any one of claims 1 to 26 in the area of cleaning auxiliary liquids in the metal processing industry.

**31.** Use according to any one of claims 1 to 26 in the area of pharmaceuticals and cosmetics.

EP 0 968 041 B1

**Revendications**

1. Utilisation d'un produit comprenant des particules de bois finement divisées, et qui ont subi à une température inférieure à 100°C et sous une pression atmosphérique un traitement à l'aide d'une lessive diluée, éliminant les matières sensoriellement actives des particules de bois, comme agent de filtration pour la filtration par flottaison.

2. Utilisation selon la revendication 1,
**caractérisée en ce que**
les particules de bois comprenant des fibres de bois.

3. Utilisation selon la revendication 1,
**caractérisée en ce que**
les particules de bois comprenant des résidus de bois réduits en morceaux.

4. Utilisation selon l'une des revendications 1 à 3,
**caractérisée en ce que**
le produit ne contient principalement des particules de bois que d'un seul et même type, de même répartition de dimensions et de même traitement préalable.

5. Utilisation selon l'une des revendications 1 à 3,
**caractérisée en ce que**
le produit contient au moins deux composantes de particules de bois divisées selon des procédés différents.

6. Utilisation selon l'une des revendications 1 à 5,
**caractérisée en ce que**
le produit contient au moins deux composants de particules de bois, réduites à des dimensions différentes.

7. Utilisation selon l'une des revendications 1 à 6,
**caractérisée en ce que**
le produit comprend des composants de particules de bois fabriqués à partir d'au moins deux matières premières différentes.

8. Utilisation selon l'une des revendications 1 à 7,
**caractérisée en ce que**
le produit contient d'autres composants organiques ou anorganiques, n'influençant pas les caractéristiques de filtration.

9. Utilisation selon l'une des revendications 1 à 8,
**caractérisée en ce que**
le produit contient d'autres composants actifs du point de vue du filtrage.

10. Utilisation selon l'une des revendications 1 à 9,
**caractérisée en ce que**
le produit contient d'autres composants minéraux.

11. Utilisation selon l'une des revendications 1 à 10,
**caractérisée en ce que**
le produit contient du kieselguhr.

12. Utilisation selon l'une des revendications 1 à 11,
**caractérisée en ce que**
le produit contient de la perlite.

13. Utilisation selon l'une des revendications 1 à 12,
**caractérisée en ce que**
les dimensions moyennes des particules du produit prêt à emploi sont inférieures à 3,0 mm.

14. Utilisation selon l'une des revendications 1 à 13,

**caractérisée en ce que**
dans le cas de particules de bois en forme de fibres, le diamètre moyen des fibres est inférieur à 1,0 mm.

15. Utilisation selon l'une des revendications 1 à 14,
    **caractérisée en ce que**
    la température du liquide de traitement pendant le traitement des particules de bois se situe dans la plage de la température ambiante.

16. Utilisation selon l'une des revendications 1 à 14,
    **caractérisée en ce que**
    la température de la lessive pendant le traitement est de l'ordre de 70 à 90°C.

17. Utilisation selon l'une des revendications 1 à 16,
    **caractérisée en ce que**
    la concentration de la lessive diluée correspond à 2 à 10 % en poids rapporté à la teneur en matières solides.

18. Utilisation selon l'une des revendications 1 à 17,
    **caractérisée en ce que**
    la lessive est de la lessive de soude.

19. Utilisation selon l'une des revendications 1 à 18,
    **caractérisée en ce que**
    la durée d'action est fixée pour éliminer au moins 10 % en poids des matières contenant du bois.

20. Utilisation selon l'une des revendications 1 à 19,
    **caractérisée en ce que**
    la durée d'action est de 5 à 120 mn.

21. Utilisation selon l'une des revendications 1 à 20,
    **caractérisée en ce que**
    la densité de la matière pour le traitement est de 5 à 25 %.

22. Utilisation selon l'une des revendications 1 à 21,
    **caractérisée en ce qu'**
    après une durée d'action on lave et on sèche les particules.

23. Utilisation selon l'une des revendications 1 à 22,
    **caractérisée en ce que**
    la taille des particules lors du traitement va jusqu'à 10 mm et de préférence de l'ordre de 0,1 à 1,0 mm.

24. Utilisation selon l'une des revendications 1 à 23,
    **caractérisée en ce qu'**
    on règle la valeur en eau en agissant sur le broyage en phase humide (refiner).

25. Utilisation selon l'une des revendications 1 à 24,
    **caractérisée en ce qu'**
    après le traitement et avant le séchage et en même temps que le séchage ou après le séchage on continue de réduire les particules.

26. Utilisation selon l'une des revendications 1 à 25,
    **caractérisée en ce qu'**
    après le traitement et après le séchage on classifie les particules.

27. Utilisation selon l'une des revendications 1 à 26, pour filtrer des boissons, en particulier de la bière.

28. Utilisation selon l'une des revendications 1 à 26, pour filtrer des produits alimentaires.

29. Utilisation selon l'une des revendications 1 à 26, pour purifier du des liquides en chimie.

**30.** Utilisation selon l'une des revendications 1 à 26, pour purifier des liquides auxiliaires pour le traitement des métaux.

**31.** Utilisation selon l'une des revendications 1 à 26, dans le domaine de la pharmacie et de la cosmétique.